# EUROPEAN PATENT APPLICATION

(11) **EP 4 252 903 A1**
(43) Date of publication of application: **04.10.2023**
(21) Application number: 22165839.6
(22) Date of filing: 31.03.2022
(51) Int. Cl.: B01J 20/08, B01D 53/04, B01J 20/10, B01J 20/16, B01J 20/20, B01J 20/22, B01J 20/28, B01J 20/32

(54) **VOLATILE ORGANIC COMPOUNDS (VOC) REDUCING PATCH FOR TREATING AUTOMOTIVE PARTS**

(71) Applicant: Autoneum Management AG, 8406 Winterthur (CH)
(72) Inventor: Godano, Philippe, 8400 Winterthur (CH); Baettig, Julia, 8050 Zürich (CH)

(57) **Abstract**

A volatile organic compound (VOC) reducing patch for treating automotive trim parts, comprising at least one active layer comprising a carrier material and at least one aldehyde scavenger, whereby the aldehyde scavenger is distributed on the surface and/or throughout at least the carrier material, and further comprising an adhesive for connecting the patch to a trim part.

## Description

### Technical Field

The present application relates to a VOC reducing patch for treating an interior trim part for a road vehicle, for example an interior floor carpet or dash inner.

### Background Art

In recent years, the awareness of volatile emissions coming from vehicle trim parts, known as volatile organic compounds (VOCs), has grown substantially. Focus on these VOCs is based on the negative user experience with strong odours, namely the "new car smell", and the perception and awareness thereof with health issues caused by volatile chemicals. Among the volatile chemicals emitted by trim parts consisting of polyurethane foam, small molecule aldehydes like formaldehyde and acetaldehyde are considered especially hazardous to human health.

In the interior of road vehicles, a multitude of trim parts may contain layers of polyurethane foam, felt layers, or other polymer-based layers in order to control noise inside the vehicle or to optimize mechanical performance. These parts may include the inner portion of a dash, the area underneath a carpet, or padding for fenders.

Polyurethane foams in particular, as reactive systems, are known to emit volatile compounds that are either formed during the foaming process or are contained in the unfoamed blend and emitted after foam polymerization. Trim parts with a foam layer have a particular problem that they emit these volatile compounds after they are placed into the vehicle, especially within the first six months of the life of the vehicle.

Specific solutions to reduce the emission of aldehydes from polyurethane foam exist that consist of reactive molecules in the polyol blend, called aldehyde scavengers. These molecules react specifically with aldehydes and are contained within the foam system after foaming. However, these molecules frequently interfere with the final physical properties of the foam system, causing softening of the foam or detrimental effects on physical properties.

Methods of reducing aldehyde emissions for trim parts in general include surface coating of the aldehyde scavengers onto the part or material or applying the scavengers inside of a release agent, which coats a mould.

Currently, most of the low-VOC trim parts that exist have been treated on their surface with a chemical agent to reduce the VOCs. These surface treatment options are invisible, preventing the end user from knowing if the surface has a chemical agent on it or not. Additionally, the application of the treatment may present environmental or health risks, in particular with workers who come in contact with the part, which require costly mitigation efforts.

The object of the present invention is to provide a treatment option for interior trim parts without the problems present in the state-of-the-art, in particular one which solves the problems of the environmental and cycle time addition to the production method of the trim part, or the problems of changed or degraded material composition of the trim part.

### Summary of invention

The object is achieved by a volatile organic compound (VOC) reducing patch for treating automotive trim parts according to the main claim. In particular, by a patch comprising at least one active layer comprising a carrier material and at least one aldehyde scavenger, and further comprising an adhesive for connecting the patch to a surface of a trim part.

The aldehyde scavenger is distributed on the surface and/or throughout at least the carrier material, and may predominantly face the trim part. While the surface of the patch that is visible and may be touched during interaction with the trim part by line workers, is not contaminated with the aldehyde scavenger and hence does not pose a health risk for the workers.

Surprisingly, the use of one or more patches, preferably only on the backside of parts or on a place not visible to the passenger of the vehicle, is already enough to noticeably reduce the VOCs in the vehicle compartment and/or in closed containers during the transport of the parts before they are placed in the vehicle.

The patch may exist in different sizes and shapes. In particular, the size and/or shape may be chosen to fit the size and shape of the trim part.

Preferably, the patch is designed so that when it is applied to the surface of the trim part, the patch does not protrude from the surface more than 2 mm so as not to impede the form or function of the trim part itself.

The size of the patch or patches used on one trim part is preferably not more than 15 percent of the overall trim part surface. Preferably only applied to the surfaces not visible to the passenger.

An emitting surface such as a layer of polyurethane foam may contain VOC by-products, such as formaldehyde and acetaldehyde, which diffuse through the foam and are emitted from the surface during the lifetime of the trim part. When released into a cavity, the VOC in the cavity air will increase in concentration until an equilibrium is reached between the VOC contained in the trim part and the VOC in the air. By adding a patch comprising an aldehyde scavenger according to the invention, a VOC sink is created, whereby the active layer of the patch continuously removes aldehydes from the air in the cavity, lowering the overall concentration of aldehydes.

The cavity for the purposes of the VOC may be the larger cavity of the car interior, or a smaller cavity which is a space between the emitting layer and another layer, such as the interior plane of the car body or a small space between 2 loosely placed parts on top of each other, for instance a flooring part on the car structure or a mat on top of a flooring part.

Surprisingly, even though the patch does not cover the emitting surface of the foam completely, the sink effect of the VOC reducing patch was enough to show reduction in the levels of emitted aldehydes in a chamber test according to ISO 12219-4. Therefore, as long as the patch is in the same cavity as the emitting surface, it is able to reduce the emission levels of the part by acting as a VOC sink.

The advantage of the patch according to the invention is a treatment, which is not an integral part of the trim part or the process of producing a trim part, but is added solely for the purpose of removing VOCs from the surrounding cavity. Because the patch is not an integral part of the trim part, it can be adhered to the trim part in any position so as to optimize the exposure to the cavity that contains the emitting surface. Furthermore, the patch can also be adhered to the trim part later during mounting of the trim part in the car, or may be replaced. In addition, it can also be applied over a specific time period, for instance during transport of the parts to the car assembly plant or during storage of the car before it is delivered to the customer.

Patches may be produced in a roll with easy to tear line, or as discreet patches on the release layer, for easy application to multiple trim parts on a production line. Depending on the size of the patch and the part, multiple patches may be used on a single part, whereby the active compound may differ between the patches used.

As the patch is not part of the standard production process of the trim parts, it is easier to decide in a later stage if and how many treatment patches are needed. Patches may even be replaced after a while to also capture VOCs in the cavity or the passenger compartment, which are coming from other sources than the trim part they are adhered to.

For instance, the cavity behind the dash panel is very often cladded with felt and or foam material, which might emit VOCs, hence one or more patches adhered to trim part surfaces behind the dash panel, preferably out of sight of the passenger, might help reducing the overall VOC, without a need for giving each part a patch.

Optionally, the patch may also be placed between two layers of an automotive trim part. A patch could be placed onto a layer and then another layer such as a polyurethane foam layer is either placed loosely on top or the patch is laminated or foamed between the layers. However, the lamination or back foaming of the patch may reduce its efficacy as the amount of circulating air and or air cavity is diminished.

Preferably, the patch is placed on the outermost layer of the trim part to maximize air exposure to the cavity and its function as a sink.

Multiple patches may be applied to a trim part in the case of large trim parts or stringent emissions requirements.

The patch according to the invention comprises at least one active layer and further comprises an adhesive for connecting the patch to a surface of a trim part. The adhesive may be applied at least partly around the rim of the patch, and/or in discrete points, and/or in a pattern, or as a full coverage of at least one outer surface. For instance, the adhesive may be applied in the form of a film, a strip or a sprayed on. Preferably the adhesive is not covering and engulfing the aldehyde scavenger.

The adhesive may be chosen, such that it allows the patch to be removed and destroyed, removed and replaced, or permanently installed onto the trim part. To be sure that the patches are not reused after they have lost their function, remove and replace options may be used with a glue that allows this only within a limited timescale.

Preferably the adhesive is at least one of a natural rubber based material, a synthetic rubber based material, like styrene-butadiene rubber, acrylate based material, methacrylate based material, polyurethane based material, or mixtures thereof.

The adhesive may be chosen such that the odour grade or the total VOC emission, of the trim part including one or more patches adhered to the surface, are not increased.

The adhesive may further comprise standard additives known in the art such as solvents, rheology modifiers, or odour reduction additives.

The materials chosen for the patch, in particular the adhesive layer, should not substantially contribute to either the odour or the total VOC.

The total VOC of a trim part and/or patch may be measured with a VOC test such as ISO 12219-4. Preferably, the total VOC of the patch as measured according to ISO 12219-4 is less than 500 µg/m³. Preferably, the total VOC of the automotive trim part including the patch is not increased by more than 500 µg/m³ in ISO 12219-4 compared to the trim part without the patch.

The odour grade of automotive trim parts and/or a patch may be measured with an odour test like ISO 12219-7 or VDA 270. The odour grade of the patch when measured with these standards is preferably not higher than a 2.5. Preferably, the odour grade of the trim part to which the patch is adhered is not increased by the presence of the patch.

The carrier material functions as a matrix for holding the scavenger in a spaced environment so the aldehydes can reach the scavenger and bind to it. The structure and material of the carrier material serve to both maximize the surface area of the carrier material comprising the aldehyde scavenger and to allow air exchange between the cavity containing the VOCs and the aldehyde scavenger in or on the carrier material.

Preferably, the carrier material is a fiber-based material, like a nonwoven, a scrim, a filter paper or a filter cloth, or a fiber containing material like a textile, a woven, or a knit. The fibers can be any of staple fibers or endless filaments.

For instance, the carrier layer may comprise a filter-paper or filter-cloth type material. By choosing this type of materials, the surface area and air exchange are maximised without compromising material strength, while reducing overall cost of the patch. Although nonwoven can have a much more open structure, the scavenger loading can be higher on filter-like materials.

The material should be wettable or made wettable such that the scavenger solution can be applied and is evenly spread throughout the carrier material and in addition enables the solute to easily evaporate.

The carrier material may comprise at least one material based on polyester, cellulose, protein, polyolefin, preferably polypropylene or polyethylene, polyamide, or polyurethane, or a mixture thereof.

Preferably, the carrier layer has an area weight between 20 and 300 g/m², preferably between 30 and 170 g/m².

The carrier material may be consolidated, for instance by mechanical means, like needling, pressing and drying, or thermal bonding, to prevent deterioration during the applications of the scavenger or during placement on the trim part.

One example of a filter-paper type material is a cellulose paper with loosely bound fibers to maximize air flow. These kinds of papers are common for air filtration and liquid filtration.

In other embodiments the carrier layer may be a woven or nonwoven material, such as those used in filter cloth. These are typically made of cotton, nylon, polyester, or polypropylene but may be made of other polymers.

Other fibers may be added to the carrier layer, such as protein fibers like wool, cellulose fibers like cotton, bamboo, hemp or jute, mineral or glass fibers, or other fibers that may improve bonding to the scavenger material, mechanical strength, or air permeability. Combinations of fiber types as well as fiber finesses may further improve the efficacy of the patch.

Due to the range of materials used regularly in automotive trim parts, like foam, virgin polyester and shoddy based materials, the more abundant and problematic group of VOC are the aldehydes, in particularly the acetaldehyde and formaldehyde.

To reduce these aldehydes, the VOC reducing patch comprises at least one aldehyde scavenger chosen from the group of dihydrazides, preferably succinic acid dihydrazide, adipic acid dihydrazide, isophthalic acid dihydrazide, carbodihydrazide, or from the group of amines, preferably an aminosilane, or from the group of amine salts, or any combination of the aforementioned.

The aldehyde scavenger may further comprise at least one substance from the group consisting of urea, preferably ethylene urea, propylene urea.

Additionally, the aldehyde scavenger may further comprise at least one of a silica gel, an aluminium oxide gel, an aluminosilicate, an activated carbon, or combinations thereof.

The final formulation, type, variety, and amount of aldehyde scavenger may be tuned to the specific emissions of the part in question. For example, some aldehyde scavengers react preferentially with formaldehyde or acetaldehyde, and the mixture may be tuned if the part emits one or the other aldehyde.

An adsorber, such as silica gel or alumina gel may be included to further improve the adsorption of aldehydes, in particular formaldehyde, increasing the likelihood that the aldehyde scavenger and the aldehyde targeted will react. The addition of the adsorber creates an aldehyde scavenging synergistic system which may be favourable or even needed in some cases.

The aldehyde scavenger or scavengers as well as any adsorber may be combined in a solution, using an appropriate solute to get an even non-precipitating mixture. Any adaptation of the solute known in the field like adaptation of the pH etc. may be done. Optionally any additives to enhance the binding to the carrier material or to speed up the evaporation of the solute may be used.

The aldehyde scavenger solution thus obtained may be applied to the carrier material by known conventional methods, like printing, pouring, dipping, applying droplets, spraying or roll application. The aldehyde scavenger may also be loaded onto the material, like fibers, before the formation of the carrier material.

The combination of the aldehyde scavenger and the carrier material forms the active layer, which is to say that this layer contains the reactive substance, which will react with the emitted aldehyde VOCs.

The active layer may further comprise a binder for binding the scavengers to the carrier material, preferably at least one resin selected from acrylic resins, vinyl chloride/vinyl acetate copolymers, polyesters; polyvinyl butyral resins, ethyl cellulose resins, polyurethane resins, modified rosin resins, polyamide resins, cellulose ether resins, cellulose nitrate resins, poly(maleic anhydride) resins, acetal polymers, styrene/methacrylate copolymers, copolymers of styrene and allyl alcohols, polyhydroxystyrenes and polyketone resins, or any combination thereof.

The active layer may also contain additional ingredients that do not contribute to the activity of the patch but instead aid in production or finishing such as surfactants, dyes, solvents, or wetting agents.

Surprisingly, the loading of the aldehyde scavenger in the carrier material forming the active layer in the patch did not hinder its efficacy in removing the aldehyde emissions from the part.

Preferably, the VOC reducing patch may comprise at least one cover layer adjacent to and in contact with at least the active layer.

The cover layer may protect the carrier material from environmental effects as well as protect any person handling the trim part from coming into contact with the active layer. Preferably, the material is resistant to abrasion and water, such as condensation, as well as flexible to be able to conform to the shape of the part. The cover layer may be larger than the active layer and the adhesive may be applied to the cover layer such that the active layer is encapsulated between the cover layer and the trim part.

As the cover layer should not reduce the efficacy of the active layer, the cover layer should allow air exchange with the active layer. Preferably, the cover layer may comprise an air permeable or micro-perforated material, preferably chosen from the group of a film, a foil, a nonwoven, a scrim, a textile, or a coating.

The cover layer may comprise the same material as the carrier material, preferably a material chosen from at least a polyester, polyolefin, cellulose, or polyamide, or any combination of the aforementioned.

In one embodiment, two cover layers may be used on either side of the active layer and sealed at the edges, and the adhesive applied to one side of the cover layer to adhere the patch to the part.

In another embodiment, the cover layer is laminated or adhered to the active layer only around the rim of the active layer, so as to prevent adhesive from blocking the air accessibility to the scavenger in the active layer.

The VOC reducing patch may further comprise a release layer to cover the adhesive layer whereby the release layer can be removed before the application of the patch to the automotive trim part.

The release layer should cover at least all of the adhesive layer and be easily removable by hand in order to apply the patch to the trim part.

Use of the patch according to the invention to reduce the emitted aldehydes from automotive trim parts, in particularly inside the passenger compartment or in the packaging the parts are transported in to the assembly plant.

The patch according to the invention may be applied to an automotive trim part to reduce the emitting aldehydes related to that trim part, by attaching the patch directly on the emitting layer. However, it may be more advantageous to attach the patch to an adjacent or opposite layer to the emitting surface, or trim part.

For instance an inner dash may have an emitting back foamed layer. The patch may then be attached to either the emitting foam layer, the adjacent fire wall layer and or the dash panel above it.

The dash normally forms a cavity above the inner dash trim part and may be treated with one or more patches to catch aldehydes emitted from different sources close to this area.

In particular, preferred trim parts include at least a layer of polyurethane foam. In-mould foamed polyurethane layers are known to have a high contribution to emitted aldehydes in a passenger compartment of a car.

At least one patch may be used on a trim part for a vehicle for eliminating VOCs, in particular aldehydes, like acetaldehyde and formaldehyde, from the surrounding air. Preferred trim parts are inner dash parts, flooring parts, door trim parts, interior cladding, dashboard cladding, headliner, floor mats, trunk flooring or trim parts, seating parts.

The trim part may be either a soft trim part comprising fibrous felt layers or foam layer or textile layers or a hard trim part, like the dashboard, close to emitting soft trim parts.

### Brief description of drawings

Figure 1 is showing a trim part with the patch according to the invention.
Figure 2 is showing a schematic layout of the trim part according to the invention.
Figure 3 is showing an alternative embodiment according to the invention.
Figure 4 is showing schematic the function of the patch applied on a trim part.

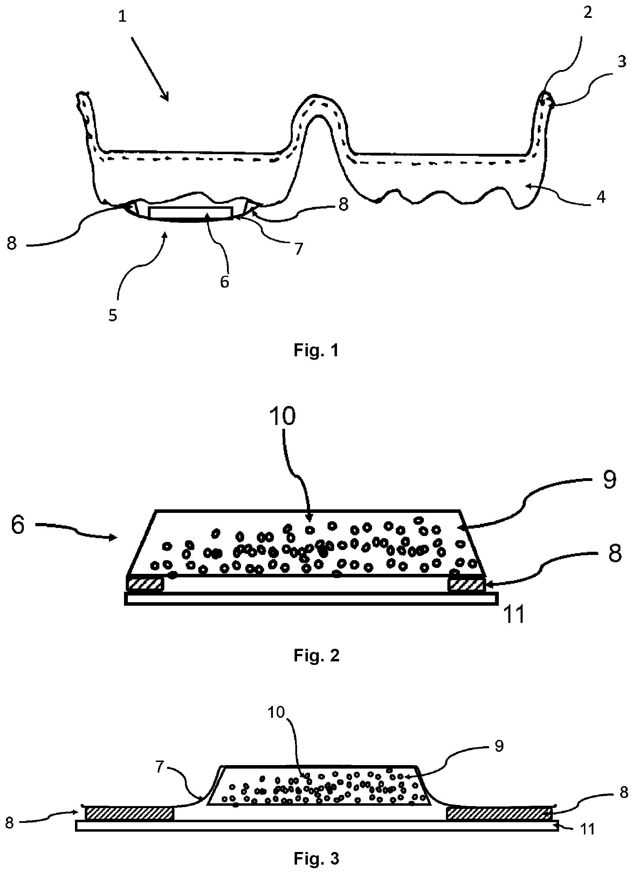

Figure 1 is showing an example of a trim part 1 in the form of a flooring part with a cover layer 2, for instance a tufted or needlepunch nonwoven surface layer facing the passenger compartment (not shown), and a foil layer 3 acting as a barrier layer against the back foamed decoupling layer 4. In particular, back foamed in the sense of an in-mould foamed polyurethane layer is a likely source for aldehydes like acetaldehyde and formaldehyde. The trim part is treated on the backside of the part with a patch 5 according to the invention adhered to the trim part with adhesive 8. The patch is comprising an active layer 6 and an optional cover layer 7. In this example the adhesive is placed on the cover layer 7 surrounding the active layer 6. The active layer 6 may be connected to the cover layer by either the same adhesive or by another known version of lamination or may be kept loose within the patch enclosed by the cover layer and the adhesive.

Figure 2 is showing a patch according to the invention with an optional release layer 11. The patch comprises at least one active layer 6 comprising a carrier material 9 and at least one aldehyde scavenger 10, whereby the aldehyde scavenger 10 is distributed on the surface and/or throughout at least the carrier material 9. The patch is further comprising an adhesive 8 for connecting the patch to a trim part.

Figure 3 is showing an alternative patch according to the invention with again a carrier layer 9 and an adhesive 8, but in addition, the patch comprises at least one covering layer 7. The adhesive may be applied on either the carrier layer, the covering layer or both. Preferably, the covering layer is extended beyond the size of the carrier layer as shown, and forms a rim around the carrier layer. The adhesive applied to the rim of the cover layer encapsulates the active layer formed by the carrier material and the aldehyde scavenger 10. This further minimises the risk of contact between the active component and the user. Preferably, the covering layer is hydrophobic; however small aldehyde molecules like formaldehyde or acetaldehyde may freely pass through the covering layer to reach the active component in the carrier layer.

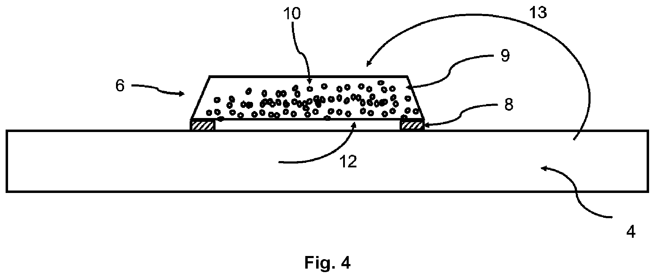

Figure 4 illustrates the function of the patch while in use and adhered to a trim part 4. Although the patch illustrated in Figure 4 uses the patch from Figure 2, the principle works in the same or similar way for all versions disclosed. The figure shows a patch as applied to a trim part 4 with at least one layer, which may be a foam or a felt. This layer may emit VOCs, including aldehydes, in particular acetaldehyde and formaldehyde.

In the case the emitting surface is not covered by the patch, the aldehydes are emitted into the adjacent cavity. The concentration of aldehydes in the adjacent cavity is increased and then decreased as they are adsorbed and reacted into the active layer 6 of the VOC removing patch as indicated by the arrow 13.

In the case the emitting surface is covered by the patch, the aldehydes are directly captured by the substance in the active layer 6, as indicated by the arrow 12.

## Claims

1. A volatile organic compound (VOC) reducing patch for treating automotive trim parts, comprising at least one active layer comprising a carrier material and at least one aldehyde scavenger, whereby the aldehyde scavenger is distributed on the surface and/or throughout at least the carrier material, **characterized in that** it further comprises an adhesive for connecting the patch to a trim part.

2. A VOC reducing patch according to claim 1, whereby the adhesive is applied at least partly around the rim of the patch, and/or in discrete points, and/or in a pattern, or as a full coverage of at least one outer surface.

3. A VOC reducing patch according to one of the preceding claims, whereby the adhesive is at least one of a natural rubber based material, a synthetic rubber based material, like styrene-butadiene rubber, acrylate based material, methacrylate based material, polyurethane based material, or mixtures thereof.

4. A VOC reducing patch according to one of the preceding claims, whereby the carrier material is a fiber-based material, like a nonwoven, a scrim, a filter paper or a filter cloth, or a fiber containing material like a textile, a woven, or a knit, preferably the fibers are staple fibers and/or endless filaments.

5. A VOC reducing patch according to one of the preceding claims, whereby the carrier material comprises at least one of polyester, cellulose based, protein based, polyolefin, preferably polypropylene or polyethylene, polyamide, or polyurethane, or a mixture thereof.

6. A VOC reducing patch for treating automotive trim parts according to the one of the preceding claims, where the carrier material comprises a filter-paper or filter-cloth type material.

7. A VOC reducing patch, according to one of the preceding claims, whereby the aldehyde scavenger comprises at least one from the group of dihydrazides, preferably succinic acid dihydrazide, adipic acid dihydrazide, isophthalic acid dihydrazide, carbodihydrazide, or from the group of amines, preferably an aminosilane, or from the group of amine salts, or any combination of the aforementioned.

8. A VOC reducing patch according to claim 7, whereby the aldehyde scavenger further comprises at least one substance from the group consisting of urea, preferably ethylene urea, propylene urea.

9. A VOC reducing patch according to claim 7 or claim 8, whereby the aldehyde scavenger further comprises at least one of a silica gel, an aluminium oxide gel, an aluminosilicate, an activated carbon, or combinations thereof.

10. A VOC reducing patch according to one of the preceding claims, whereby the active layer is further comprising a binder for binding the scavengers to the carrier material, preferably at least one resin selected from acrylic resins, vinyl chloride/vinyl acetate copolymers, polyesters; polyvinyl butyral resins, ethyl cellulose resins, polyurethane resins, modified rosin resins, polyamide resins, cellulose ether resins, cellulose nitrate resins, poly(maleic anhydride) resins, acetal polymers, styrene/methacrylate copolymers, copolymers of styrene and allyl alcohols, polyhydroxystyrenes and polyketone resins, or any combination thereof.

11. A VOC reducing patch according to one of the preceding claims, whereby the patch further comprises at least one cover layer adjacent to and in contact with at least the active layer.

12. A VOC reducing patch according to claim 10, whereby the cover layer comprises an air permeable or microperforated material, preferably chosen from the group of a film, a foil, a nonwoven, a scrim, a textile, or a coating.

13. A VOC reducing patch according to claim 11 and 12, whereby the cover layer may comprise the same material as the carrier material, preferably a material chosen from at least a polyester, polyolefin, cellulose, or polyamide, or any combination of the aforementioned.

14. A VOC reducing patch according to claim 1 further comprising a release layer to cover the adhesive layer whereby the release layer can be removed before the application of the patch to the automotive trim part.

15. Automotive interior trim part comprising at least one VOC reducing patch according to at least one of the preceding claims whereby the patch is adhered to a surface of the trim part.
